# EUROPÄISCHE PATENTSCHRIFT

(11) **EP 3 768 791 B1**
(45) Veröffentlichungstag und Bekanntmachung des Hinweises auf die Patenterteilung: **06.05.2026**
(21) Anmeldenummer: 19714336.5
(22) Anmeldetag: 19.03.2019
(51) Int. Cl.: C09J 7/38, C08K 5/00, C08K 5/134, C09J 153/02

(54) **WITTERUNGSBESTÄNDIGE KLEBEMASSE MIT GUTEM AUFFLIESSVERMÖGEN UND DARAUF BASIERENDE KLEBEBÄNDER**
WEATHER-RESISTANT ADHESIVE WITH GOOD FLOWING CAPABILITY AND ADHESIVE TAPES BASED ON SAME
MATIÈRE ADHÉSIVE RÉSISTANTE AUX INTEMPÉRIES PRÉSENTANT UNE BONNE APTITUDE À L'ÉCOULEMENT ET BANDES ADHÉSIVES BASÉES SUR CELLE-CI

(30) Priorität: 23.03.2018 DE 102018204464
(43) Veröffentlichungstag der Anmeldung: 27.01.2021
(73) Patentinhaber: tesa SE, 22848 Norderstedt (DE)
(72) Erfinder: DOLLASE, Thilo, 22397 Hamburg (DE); GARBERS, Julia, 22159 Hamburg (DE); FENSKE, Martin Tassilo, 22605 Hamburg (DE)
(74) Vertreter: tesa SE
(86) Internationale Anmeldenummer: PCT/EP2019/056895
(87) Internationale Veröffentlichungsnummer: WO 2019/180052

(56) Entgegenhaltungen:
- WO-A1-2010/009854
- JP-A- 2017 186 487
- US-A1- 2017 292 048

## Beschreibung

Die vorliegende Erfindung betrifft eine Klebemasse für Permanentverklebungen mit hoher Witterungsstabilität, darauf basierende Klebebänder sowie deren Verwendung.

Styrolblockcopolymerhaltige Haftklebemassen sind bekannt und werden in verschiedensten Selbstklebebändern zu unterschiedlichen Zwecken eingesetzt. Die Kombination von Polystyrolblöcken und Polydienblöcken führt zu für viele Anwendungen vorteilhaften mechanischen und klebtechnischen Eigenschaften. Jedoch ist für bestimmte Anwendungen verbesserte Alterungsbeständigkeit gewünscht. Zu diesem Zweck werden häufig Styrolblockcopolymere eingesetzt, deren Polydienblock hydriert und damit gesättigt ist. Solche Formulierungen eignen sich auf Grund relativ geringer Klebkräfte besonders für reversible Haftklebeanwendungen, aber auch als Hotmelts.

Probleme entstehen, wenn man solche alterungsstabilen Klebemassen "tackifizieren", also deren Anfassklebrigkeit erhöhen möchte, um zu gewährleisten, dass die Klebeverbindung bereits unter möglichst geringem Druck bei möglichst geringer Kontaktzeit entsteht, denn bei Verwendung von Blockcopolymeren, deren Elastomerblöcke im Wesentlichen komplett gesättigt vorliegen, ist eine Tackifizierung schwierig; sie erfordert eine spezielle Harz/Weichharz-Kombination.

Dies gilt umso mehr, wenn eine Klebemasse für die Haftung auf porösen und/oder faserhaltigen Untergründen geeignet sein soll. Die für diesen Fall gestellten Anforderungen, nämlich ein gewisses Einfließen der Klebemasse in den porösen Untergrund, können durch herkömmliche witterungsbeständige Klebemassen nicht in ausreichendem Maße erfüllt werden. Dies gilt umso mehr, wenn neben einer guten Haftung auf porösem Untergrund auch ein Ausquetschen der Klebemasse, das sog. "Oozing", vermieden werden soll. Oozing tritt auf, wenn die Klebemasse zu weich und daher nicht formstabil ist und im Falle eines aufgewickelten Klebebandes an den Seiten aus der Rolle austritt. Es ist bekannt, einer Klebemasse für die Einstellung der Fließfähigkeit Weichmacher zuzusetzen.

Alterungsstabile Klebemassen sind z.B. aus der DE 102 52 089 A1 bekannt. Die Schrift offenbart Klebemassen mit mindestens einem Blockcopolymer mit ein oder zwei endständigen Blöcken, bestehend aus Vinylaromaten, und einem Block bestehend aus einem konjugierten Dien, bei dem der Anteil an 1,2-verknüpftem Dien selektiv hydriert ist. Als Klebharze kommen sehr bevorzugt hydrierte Kohlenwasserstoffharze zum Einsatz Weichmacher werden erwähnt; sie werden bis zu höchstens 5 Gew.-% eingesetzt, bevorzugt wird auf sie komplett verzichtet. Die so erhaltenen Klebemassen weisen zwar eine erhöhte Alterungsstabilität auf, jedoch ist ihr Klebverhalten, insbesondere die Anfassklebrigkeit, auf porösen und/oder faserigen Oberflächen noch verbesserungsfähig. Klebemassen mit erhöhter Alterungsstabilität und verbesserter Klebkraft und Anfassklebrigkeit, um auch auf rauen und unpolaren Untergründen eingesetzt werden zu können, sind in der DE 10 2008 034 369 A1 und der EP 2 147 959 A1 beschrieben. Auch hierbei handelt es sich um Klebemassen enthaltend mindestens ein Blockcopolymer, das im Elastomerblock selektiv hydriert oder gesättigt vorliegt, wobei beispielsweise in der Hauptsache die endständigen Doppelbindungen gesättigt vorliegen. Bei den in den genannten Schriften beschriebenen Klebemassen handelt es sich um solche mit einem ersten Blockcopolymer mit einem oder mehreren endständigen Blöcken bestehend aus Vinylaromaten und mindestens einem Block bestehend aus konjugierten Dienen, bei dem die endständigen Doppelbindungen, entstanden durch 1,2-Verknüpfung, zu mehr als 80% hydriert sind, während die Doppelbindungen in der Hauptkette, entstanden durch 1,4-Verknüpfung, zu weniger als 30% hydriert sind, und mindestens einem zweiten Blockcopolymer mit einem oder mehreren endständigen Blöcken bestehend aus Vinylaromaten und mindestens einem Block bestehend aus konjugierten Dienen, bei dem mindestens 95% der Doppelbindungen hydriert sind. Als Weichmacher kommen Weichmacheröle wie Mineralöle zum Einsatz oder niedermolekulare flüssige Polymere wie zum Beispiel niedermolekulare Polybutene.

Weitere Klebemassen auf Basis eines SBBS-Blockcopolymers sind in der JP 2002/097,432 A, der US 7,268,178 B2, der WO 2010/009854 A1, der US 2017/292048 A1, der JP 2017/186487 A und der US 2011/0086563 A1 beschrieben. Weichmacher sind jeweils entweder nicht enthalten oder kommen in Form von flüssigen Verbindungen, insbesondere Pflanzen- und Mineralölen, zum Einsatz.

Dem Fachmann sind aus dem Stand der Technik somit als Weichmacher für auf hydrierten Styrolblockcopolymeren basierenden Haftklebeformulierungen also vor allem Öle (paraffinische oder naphthenische) und flüssige Polyolefine oder Kautschuke oder flüssige Kohlenwasserstoffharze bekannt. Die bekannten Klebemassen weisen gerade für poröse und/oder faserhaltige Oberflächen noch Optimierungspotenzial im Hinblick auf die Klebeeigenschaften, insbesondere den Tack, auf.

Der vorliegenden Erfindung lag daher die Aufgabe zugrunde, eine Klebemasse bereitzustellen, die eine hohe Langzeitstabilität aufweist und insbesondere für die Verklebung auf porösen und/oder faserhaltigen Materialien, die auch flexibel und/oder unpolar sein können, geeignet ist und die insbesondere über einen guten Tack verfügen.

Überraschenderweise wurde gefunden, dass eine Klebemasse, bestehend aus Elastomer, mindestens einem Klebharz, optional einem Weichharz sowie optional mindestens einem weiteren Additiv, wobei die Klebemasse eine der beiden folgenden Zusammensetzungen A oder B aufweist:

### Zusammensetzung A:

- Aa): 35 Gew.-% bis 60 Gew.-% einer Elastomerkomponente, die zu mindestens 80 Gew.-% zumindest eine Sorte eines Vinylaromatenblockcopolymers enthält, das zumindest einen Block bestehend aus konjugierten Dienen enthält, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind,
- Ab): 0 Gew.-% bis 40 Gew.-% zumindest einer Sorte eines ersten Klebharzes, das ein teil- oder vollhydriertes Kohlenwasserstoffharz mit einem Hydrierungsgrad von mindestens 65% ist,
- Ac): 10 Gew.-% bis 50 Gew.-% zumindest einer Sorte eines zweiten Klebharzes, das ein Kolophoniumester ist,
- Ad): 0 Gew.-% bis 25 Gew.-% eines Weichharzes mit einer Schmelzviskosität bei 25°C und 1 Hz von mindestens 5 Pa s,
- Ae): 0 Gew.-% bis 5 Gew.-% mindestens eines weiteren Additivs,

wobei der Gesamtanteil an Klebharz 20 Gew.-% bis 50 Gew.-% beträgt;
oder Zusammensetzung B:
   - Ba): 35 Gew.-% bis 60 Gew.-% einer Elastomerkomponente, die zu mindestens 80 Gew.-% zumindest eine Sorte eines Vinylaromatenblockcopolymers enthält, das zumindest einen Block bestehend aus konjugierten Dienen enthält, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind,
   - Bb): 10 Gew.-% bis 50 Gew.-% zumindest einer Sorte eines ersten Klebharzes, das ein teil- oder vollhydriertes Kohlenwasserstoffharz mit einem Hydrierungsgrad von mindestens 65% ist,
   - Bc): 0 Gew.-% bis 10 Gew.-% zumindest einer Sorte eines zweiten Klebharzes, das ein Kolophoniumester ist,
   - Bd): 15 Gew.-% bis 25 Gew.-% eines Weichharzes mit einer Schmelzviskosität bei 25°C und 1 Hz von mindestens 5 Pa s,
   - Be): 0 Gew.-% bis 5 Gew.-% mindestens eines weiteren Additivs,
wobei der Gesamtanteil an Klebharz 10 Gew.-% bis 50 Gew.-% beträgt, wobei der Anteil niederviskoser Weichmacher in der Klebemasse bei höchstens 1 Gew.-% liegt. diese Anforderungen erfüllt und es erlaubt, in einen porösen und/oder faserhaltigen Untergrund einzufließen, um einen guten Verbund herzustellen, aber gleichzeitig eine ausreichende Kohäsion zur Vermeidung von Oozing sowie eine gute Langzeitstabilität aufweist und eine gute Anfassklebrigkeit bietet. Unter "guter Langzeitstabilität" ist dabei insbesondere die Stabilität gegenüber Temperatur-, Licht- und Oxidationseinflüssen zu verstehen.

"Bestehen aus" bzw. "bestehend aus" im Sinne der vorliegenden Erfindung bedeutet dabei, dass eine (Klebemasse-)Zusammensetzung, Klebemasse bzw. (Klebemasse-) Formulierung nur die angeführten Verbindungen enthält und darüber hinaus keine weiteren Inhaltsstoffe vorhanden sind. In der vorliegenden Erfindung werden die Begriffe (Klebemasse-)Zusammensetzung, Klebemasse und (Klebemasse-)Formulierung synonym verwendet.

Bevorzugte Ausführungsformen der Klebemasse befinden sich in den Unteransprüchen.

### (a) Elastomerkomponente

Die Elastomerkomponente (Blockcopolymerkomponente) enthält zu mindestens 80 Gew.-% zumindest eine Sorte eines Vinylaromatenblockcopolymers (wie insbesondere Styrolblockcopolymers), das zumindest einen Block bestehend aus konjugierten Dienen enthält, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind. Das Vinylaromatenblockcopolymer ist vorzugsweise ein Styrolblockcopolymer, bevorzugter ein Polystyrol-Poly(butadien-*co*-butylen)-Blockcopolymer (SBBS). Unter einem Polystyrol-Poly(butadien-co-butylen)-Blockcopolymer (SBBS) wird im Allgemeinen ein Blockcopolymer verstanden, das im Elastomerblock, d.h. Weichblock, selektiv gesättigt (hydriert) vorliegt, und zwar liegen dabei in der Hauptsache die endständigen Doppelbindungen hydriert vor. Das Polystyrol-Poly(butadien-*co*-butylen)-Blockcopolymer weist typischerweise ein oder mehrere endständige Polystyrolblöcke und mindestens einen Poly(butadien-co-butylen)-Block auf. Das Polystyrol-Poly(butadien-*co*-butylen)-Blockcopolymer kann verschiedene Strukturen oder eine Mischung verschiedener Strukturen aufweisen. So kann es sich bei SBBS insbesondere um Triblockcopolymer, Diblockcopolymer, lineares oder radiales höheres Multiblockcopolymer oder eine Mischung davon handeln. Besonders bevorzugt ist das Polystyrol-Poly(butadien-*co-*butylen)-Blockcopolymer, zumindest anteilig, Polystyrol-Poly(butadien-*co*-butylen)-Polystyrol (d.h. Triblockcopolymer). Das Polystyrol-Poly(butadien-*co*-butylen)-Blockcopolymer kann erfindungsgemäß auch als Mischung mit anderem Vinylaromatenblockcopolymer (insbesondere Styrolblockcopolymer), das wie vorstehend definiert ist, eingesetzt werden.

Vorzugsweise besteht die Elastomerkomponente vollständig aus dem zuvor beschriebenen Polystyrol-Poly(butadien-*co*-butylen)-Blockcopolymer (SBBS).

Kommen zusätzlich weitere Vinylaromatenblockcopolymere zum Einsatz, können dies insbesondere gesättigte Styrolblockcopolymere sein. Die Sättigung bezieht sich dabei jeweils nicht auf den Styrolblock, sondern auf den Elastomerblock, d.h. Weichblock. Die gesättigten Styrolblockcopolymere sind typischerweise ausgewählt aus der Gruppe, bestehend aus Polystyrol-Poly(ethylen-*co*-butylen)-Polystyrol (SEBS), Polystyrol-Poly(ethylen-co-propylen)-Polystyrol (SEPS), im Elastomerblock gesättigtem Polystyrol-Poly(isopren-co-butadien)-Polystyrol (SEEPS), Polystyrol-Poly-iso-Butylen-Polystyrol (SiBS) und einer beliebigen Mischung davon.

Der Anteil der Elastomerkomponente an der Klebemasse beträgt 35 Gew.-% bis 60 Gew.-%. Mit diesen Gewichtsanteilen ist eine wunschgemäße Kohäsion der Klebemasse gewährleistet.

Die Elastomerkomponente enthält vorteilhaft zumindest anteilig ein Diblockcopolymer, bestehend aus einem A-Block (Polymerblock, vorwiegend gebildet aus Vinylaromat wie insbesondere Styrol) und einem B-Block (Polymerblock, vorwiegend gebildet durch Polymerisation von Butadien (und anschließender Hydrierung wie vorstehend definiert)). Diblockcopolymere tragen zu Tack und Auffließvermögen der Klebemasse bei. Zumindest ein Vinylaromatenblockcopolymer wie Styrolblockcopolymer ist typischerweise ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zur Kohäsion bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt bei mindestens 35 Gew.-% und bei höchstens 60 Gew.-%. Deutlich geringere Anteile an Elastomer führen zu nicht ausreichender Kohäsion, was sich in reduzierter Halteleistung und/oder zu stark ausgeprägtem Oozing äußert. Deutlich höhere Anteile an Elastomer führen zu einem Abfall an Verklebungsfestigkeit insbesondere auf unpolaren Untergründen. Es leidet zudem das Auffließverhalten auf porösen und/oder faserhaltigen Substraten.

Der Anteil an Diblockcopolymeren bezogen auf die Elastomerkomponente in der Klebemasseformulierung liegt bevorzugt bei mindestens 25 Gew.-%, sehr bevorzugt bei mindestens 50 Gew.-%. Bevorzugt enthält die Elastomerkomponente höchstens 90 Gew.-% Diblockcopolymer. Höhere Diblockanteile führen zu nicht ausreichender Kohäsion, was sich in reduzierter Halteleistung äußert. Entsprechend beträgt der Anteil an Tri- oder höherem Multiblockcopolymer in der Elastomerkomponente vorzugsweise von 10 Gew.-% bis 75 Gew.-%, vorzugsweise 10 Gew.-% bis 50 Gew.-% in Bezug auf die Elastomerkomponente. Unter den Tri- oder höheren Multiblockcopolymeren sind die Triblockcopolymere besonders bevorzugt.

Die gewichtsmittlere Molmasse der Blockcopolymere liegt zwischen 50 000 g/mol und 500 000 g/mol, bevorzugt zwischen 75 000 g/mol und 200 000 g/mol (jeweils bestimmt nach Test IVb). Der Anteil an Vinylaromatenblock in den Vinylaromatenblockcopolymeren kann von Blockcopolymersorte zu Blockcopolymersorte in der Formulierung unterschiedlich sein, liegt aber typischerweise bei mindestens 12 Gew.-%, bevorzugt bei mindestens 25 Gew.-% und höchstens bei 40 Gew.-%, bevorzugt höchstens bei 35 Gew.-%. Ein zu geringer Vinylaromatenanteil führt zu unzureichender physikalischer Vernetzung, die in den Vinylaromatenblockcopolymeren durch Mikrophasenseparation geschaffen wird. Die physikalische Vernetzung ist für Halteleistung und Reißfestigkeit wichtig und wirkt Oozing entgegen. Bei einem zu hohen Vinylaromatenanteil dagegen verliert die Klebemasse an Klebrigkeit.

Polystyrol-Poly(butadien-*co*-butylen)-Blockcopolymere können z.B. von der Firma Asahi Kasei unter der Marke "Tuftec P" und "Tufprene" bezogen werden.

Polystyrol-Polyisobutylen-Blockcopolymere sind unter der Marke "Sibstar" der Fa. Kaneka erhältlich. SEBS, SEPS können unter der Bezeichnung "Kraton G" von der Firma Kraton bezogen werden. SEPS und SEEPS werden z.B. als "Septon" von der Firma Kuraray angeboten. SEBS wird von der Firma Asahi unter "Tuftec H" und von der von Firma Dynasol unter Calprene CH vertrieben.

### (b) Erstes Klebharz

Klebharze sind spezielle Verbindungen mit im Vergleich zu den Elastomeren niedriger Molmasse, üblicherweise mit einem Molekulargewicht (Test IVa) M_{W} < 5 000 g/mol. Typischerweise beträgt das Molekulargewicht M_{W} von 500 bis 5 000 g/mol, bevorzugt von 500 bis 2 000 g/mol. Das zumindest eine erste Klebharz ist ein teil- oder vollhydriertes Kohlenwasserstoffharz mit einem Hydrierungsgrad von mindestens 65%. Vorzugsweise beträgt der Hydrierungsgrad mindestens 70%, insbesondere mindestens 80%, und ganz besonders bevorzugt ist das Kohlenwasserstoffharz vollständig hydriert.

Bevorzugt geeignet sind u. a.
- hydrierte Polymerisate des Dicyclopentadiens (zum Beispiel Escorez 5300er Serie; Exxon Chemicals // Sukorez Serie der Firma Kolon)
- hydrierte Polymerisate von bevorzugt C8- und C9-Aromaten (zum Beispiel Regalite und Regalrez Serien; Eastman Chemical//Arkon P Serie; Arakawa), diese können durch Hydrierung von Polymerisaten aus reinen Aromatenströmen entstehen oder auch durch Hydrierung von Polymerisaten auf Basis von Gemischen unterschiedlicher Aromaten entstehen
- teilhydrierte Polymerisate von C8- und C9-Aromaten (zum Beispiel Regalite und Regalrez Serien; Eastman Chemical//Arkon M; Arakawa)
- hydrierte Polyterpenharze (zum Beispiel Clearon P; Yasuhara)
- hydrierte C5/C9-Polymerisate (zum Beispiel ECR-373; Exxon Chemicals)
- aromatenmodifizierte selektiv hydrierte Dicyclopentadien-Derivate (zum Beispiel Escorez 5600er Serie; Exxon Chemicals)
- Hydrierte C5-Polymerisate (zum Beispiel Eastotac Serie; Eastman Chemical)

Beispiele für besonders geeignete erste Klebharze sind die unter den Bezeichnungen Regalite R 1100 und R 1125 vertriebenen hydrierten Kohlenwasserstoffharze der Firma Eastman Chemical.

Der Gesamtanteil an erstem Klebharz beträgt in der Variante A 0 Gew.-% bis 40 Gew.-%, bevorzugt 10 Gew.-% bis 30 Gew.-% und in der Variante B 10 Gew.-% bis 50 Gew.-%, bevorzugt 20 Gew.-% bis 40 Gew.-%.

### (c) Zweites Klebharz

Das zumindest eine zweite Klebharz ist ein Kolophoniumester. Das zweite Klebharz weist eine Harzerweichungstemperatur (nach Test V) von mindestens etwa 70 °C, bevorzugt von mindestens etwa 90 °C, und höchstens +140 °C, bevorzugt von höchstens +120 °C auf. Bei dem verwendeten Kolophoniumester kann es sich um auf nicht hydriertem, partiell und/oder vollständig hydriertem Kolophoniumester basierendes Harz handeln. Insbesondere handelt es sich um einen stabilisierten und/oder hydrierten Typ.

Hauptbestandteil der vorgenannten Kolophoniumharze sind Harzsäuren umfassend hauptsächlich Pimarsäure und Abietinsäure. Weitere enthaltende und/oder synthetisch veränderte Harzsäuren sind Neoabietinsäure, Palustrinsäure, Dihydroabietinsäure oder Dehydroabietinsäure, iso-Pimarsäure, Lävopimarsäure und Boswelliasäure. Das Tallöl ist ein aus dem festen Kolophoniumharz gewonnenes öliges Stoffgemisch umfassend neben den bereits genannten Harzsäuren Fettsäuren, insbesondere ungesättigte Fettsäuren mit 18 C-Atomen, und Sterine. Die Harzsäuren und/oder Fettsäuren sind verestert, insbesondere mit Triethylenglycol, Glycerin oder Pentaerythritol, und gegebenenfalls oligomerisiert, stabilisiert, (teil-, hochgradig oder voll-) hydriert, dehydriert und/oder disproportioniert.

Harze der Firma Eastman Chemical wie Glycerolester des Kolophoniumharzes beziehungsweise der Tallöl basierenden Harze wie Permalyn^{™} 2085, Permalyn^{™} 5095, Permalyn^{™} 5095-C, hydriertes beziehungsweise teilweise hydriertes Kolophoniumharz wie Foral^{™} 105-E CG, Foral^{™} 85-E, Foral^{™}, 85-E CG, Foral^{™} 105-E, Dymerex^{™}, Foral^{™} AX-E, Foralyn^{™} E, Poly-Pale^{™}, Staybelite^{™} Resin-E, Pentaerytritolester der Kolophonium beziehungsweise Tallöl basierenden Harze wie Permalyn^{™} 51 1 -M, Permalyn^{™} 3100, Permalyn^{™} 51 10, Permalyn^{™} 51 10-C, Permalyn^{™} 61 10, Permalyn^{™} 61 10-M und Permalyn^{™} 8120 sind Beispiele für einsetzbare Harze.

Harze der Firma Pinova wie Pinova^{™} Ester Gum 8DA, Melhi^{®} NLM, Pexalyn^{®} 9085, Staybelite^{®} Ester 5, Staybelite^{®} Ester 5A, Staybelite^{®} Ester 10, Staybelite^{®} Ester 10A, Foral^{®} 85, Foral^{®} 85LB, Foral^{®} 2085, Pentalyn^{®} A, Pexalyn^{®} 9100, Pexalyn^{®} T100, Pexalyn^{®} 295, Pentalyn^{®} H, Pentalyn^{®} HA, Pentalyn^{®} 830, Pentalyn^{®} FC, Pentalyn^{®} G, Pentalyn^{®} X, Foral^{®} 105 sind weitere Beispiele für einsetzbare Harze.

Harze der Firma DRT wie Granolite SG, Granolite P, Dertoline SG2, Dernatac G95, Dernatac P105, Hydrogral P sind weitere Beispiele für einsetzbare Harze.

Bevorzugte Beispiele für die zweiten Klebharze sind Kolophoniumesterharze oder Rohtallölesterharze, wobei hydrierte oder disproportionierte Kolophoniumester ganz besonders bevorzugt sind. Explizit genannt seien hier Foral 105-E, Foral 85-E und insbesondere Foral AX-E (sämtlich Produkte der Firma Eastman Chemical).

Der Gesamtanteil an zweitem Klebharz beträgt in der Variante A 10 Gew.-% bis 50 Gew.-%, bevorzugt 20 Gew.-% bis 40 Gew.-%, sehr bevorzugt 25 Gew.-% bis 35 Gew.-%.

In der Variante B beträgt der Anteil an zweitem Klebharz 0 Gew.-% bis 10 Gew.-%.

Der Gesamtanteil an Klebharz beträgt bei der Variante A 20 Gew.-% bis 50 Gew.-%, bei der Variante B liegt er bei 10 Gew.-% bis 50 Gew.-%.

### (d) Weichmacher

Im Sinne dieser Erfindung werden als Weichmacher Weichharze mit einer Schmelzviskosität bei 25°C und 1 Hz von mindestens 5 Pa·s eingesetzt. Vorzugsweise beträgt die Schmelzviskosität bei 25°C und 1 Hz mindestens 25 Pa·s.

Bei dem Weichharz kann es sich vorzugsweise um ein Kolophonium basierendes oder um ein Kohlenwasserstoff basierendes Weichharz handeln. Dabei können insbesondere Harze aus den Harzklassen der C5-Harze, der Polyterpen-Harze (hergestellt aus α-Pinen, β-Pinen, δ-Limonen oder Gemischen dieser Ausgangsstoffe), der C9-Harze, der aromatisch modifizierten α-Pinen-Harze, der aromatisch modifizierten β-Pinen-Harze, der aromatisch modifizierten δ-Limonen-Harze und der aromatisch modifizierten Dipenten-Harze gewählt werden. Bei dem Kolophonium basierenden Weichmacher handelt es sich insbesondere um einen hydrierten oder stabilisierten Kolophoniumester.

In der Variante A der vorliegenden Erfindung beträgt der Gewichtsanteil der Weichharze 0 Gew.-% bis 25 Gew.-%, vorzugsweise 5 Gew.-% bis 20 Gew.-%.

In einer zweiten Variante der vorliegenden Erfindung beträgt der Gewichtsanteil der Weichharze 15 Gew.-% bis 25 Gew.-%.

Übliche niederviskose Weichmacher wie Mineralöle sind im Sinne dieser Erfindung unvorteilhaft. Ihr Anteil in der Gesamtrezeptur liegt bei höchstens 1 Gew.-%, bevorzugt wird auf solche Weichmacher vollständig verzichtet, d.h die erfinderischen Klebemassen sind vorzugsweise frei von niederviskosen Weichmachern. Durch diese Abwesenheit von niederviskosen Weichmachern wird verhindert, dass die beschichteten Oberflächen verfetten.

### (e) Optionale weitere Additive

Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 2 Gew.-%, bezogen auf die Gesamtklebemassezusammensetzung.

Füllstoffe oder Pigmente können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Antioxidationsmittel werden insbesondere in einer Menge von 0,2 Gew.-% bis 1,5 Gew.-% eingesetzt. Dabei sind Alterungsschutzmittel, ausgewählt aus der Gruppe der Ein- und/oder Mehrkernphenole, die in Ortho- und/ oder Parastellung zur phenolischen OH-Gruppe eine Benzylthioethergruppierung tragen, besonders bevorzugt.

Weiterhin bevorzugt ist der Zusatz von mindestens einem UV-Schutzmittel, insbesondere in einer Menge von 0,5 Gew.-% bis 2 Gew.-%.

Die vorliegende Erfindung betrifft darüber hinaus auch Klebebänder, enthaltend zumindest eine Schicht einer erfindungsgemäßen Klebemasse.

Typische Produktaufbauten sind Klebebänder (einseitige oder doppelseitige), -folien und -stanzlinge. Einseitige oder doppelseitige Klebebänder, -folien oder -stanzlinge enthalten zumindest eine Lage eines permanent im Produkt verbleibenden Trägers. Kommt keine permanent im Klebeband vorhandene Trägerschicht zum Einsatz (bei einem sog. Transferklebeband), dann liegen Schichtdicken der Klebemasseschichten bei mindestens 20 µm und bei bis zu 1 mm. Sehr bevorzugt sind Schichtdicken zwischen etwa 40 µm und etwa 800 µm. Vielfältige Anwendungsmöglichkeiten sind auch für Klebebänder zwischen etwa 75 µm und etwa 400 µm denkbar, sofern keine weiteren Schichten wie insbesondere permanent im Klebeband vorhandenes Trägermaterial zum Einsatz kommen. Kommen Klebeschichten basierend auf erfindungsgemäßen Klebemassen auf einem im Klebeband permanent vorhandenem Trägermaterial (doppelseitige Klebebänder) zum Einsatz, dann liegen die Schichtdicken dieser Klebeschichten bei mindestens 15 µm und bevorzugt höchstens 250 µm, bevorzugt bei mindestens 50 µm und sehr bevorzugt bei höchstens 150 µm.

Im Falle von doppelseitigen Klebebändern, die mindestens einen permanent im Produkt verbleibenden Träger aufweisen, können auf den beiden Seiten des Trägers unterschiedliche Klebemassen aufgetragen sein. Dadurch ist es möglich, Oberflächen mit sehr unterschiedlichen Eigenschaften miteinander zu verbinden. So sind beispielsweise doppelseitige Klebebänder denkbar, die eine permanent im Klebeband verbleibende Trägerschicht enthalten, deren erster Hauptoberfläche eine Schicht A einer erfindungsgemäßen Klebemasse zugeordnet ist und deren zweiter Hauptoberfläche eine Schicht B einer anderweitig ausgewählten Klebemasseschicht zugeordnet ist. Für Schicht B kann vorteilhaft eine Polyacrylat-basierende Klebemasse ausgewählt werden. Für Schicht B kann zudem vorteilhaft eine Polyisobutylen-basierende Klebemasse ausgewählt werden. Für Schicht B kann zudem vorteilhaft eine Polyethylvinylacetat (EVA)-basierende Klebemasse ausgewählt werden. Für Schicht B kann zudem vorteilhaft eine Klebemasse basierend auf gesättigten Styrolblockcopolymeren ausgewählt werden, die nicht den Beschreibungen für erfindungsgemäße Klebemasseformulierungen entsprechen also beispielsweise andere Typen von Kleb- und/oder Weichharzen oder Kleb- und/oder Weichharze in anderen Anteilen.

Für Schicht B kann jedoch auch eine weitere Schicht einer erfindungsgemäßen Klebemasse ausgewählt werden, in gleicher oder verschiedener Art im Vergleich zu der für Schicht A ausgewählten.

Zur Herstellung der optional zumindest einen permanent im Produkt verbleibenden Trägerfolie können prinzipiell alle filmbildenden und/oder extrusionsfähigen Polymere eingesetzt werden. Siehe hierzu beispielsweise die Zusammenstellung von Nentwig [J. Nentwig, Kunststofffolien, Kapitel 5, 2. Aufl., 2000, C. Hanser, München]. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung in Bezug auf permanent im Produkt verbleibende Trägerfolien werden Polyvinylacetate eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von beispielsweise Polyethylenterephthalat (PET) oder Polybutylenterephthalat (PBT) eingesetzt. Es ist auch möglich, halogenierte Kohlenwasserstoffe als Folienbasismaterial wie zum Beispiel Polyvinylidenchlorid oder fluorierte Systeme zu nutzen. In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höherfunktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren bevorzugten Auslegung dieser Erfindung werden Polyme thacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur ab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der zumindest einen optionalen Trägerfolie eingesetzt werden.

Die optional zumindest eine Trägerfolie kann wahlweise monoaxial orientiert, biaxial orientiert oder nicht orientiert vorliegen.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern. Als weitere optional einsetzbare Additive können Alterungsschutzmittel, Lichtschutzmittel wie insbesondere UV-Schutzmittel, Antioxidantien, weitere Stabilisatoren, Flammschutzmittel, Pigmente, Farbstoffe und/oder Blähmittel enthalten sein.

Die optional zumindest eine Trägerfolie kann selbst als Einschichtaufbau zum Einsatz kommen, oder auch als mehrschichtiger Verbund, der beispielsweise durch Coextrusion gewonnen wurde. Ferner kann die Trägerfolie auch auf einer und/oder beiden Seiten vorbehandelt und/oder mit einer funktionellen Schicht versehen sein. Sind beide Seiten vorbehandelt und/oder beschichtet, dann kann die Art und/oder Ausprägung der Vorbehandlung und/oder Beschichtung unterschiedlich oder gleich sein. Eine solche Vorbehandlung und/ oder Beschichtung kann beispielsweise zu einer verbesserten Verankerung einer weiteren Schicht dienen wie beispielsweise der zumindest einen Klebemassenschicht A oder anderer optional einsetzbarer Schichten. Zu diesem Zweck ist es besonders vorteilhaft, wenn eine oder beide Seiten der Trägerfolie mit einer oder verschiedenen Sorte(n) an Primern und/oder wenn eine oder beide Seiten der Trägerfolie durch eine Corona-Behandlung und/oder eine Beflammung und/oder eine Plasmabehandlung und/oder weitere Methoden zur Oberflächenaktivierung vorbehandelt werden.

Die optional zumindest eine Trägerfolie kann im Sinne dieser Erfindung transparent und farblos oder aber transparent und farbig sein. Außerdem ist es erfindungsgemäß, wenn die Folie nicht transparent ist und zudem weiß, grau, schwarz oder farbig.

Die optional zumindest eine Schicht eines Trägermaterials weist eine Schichtdicke zwischen einschließlich 5 µm und einschließlich 500 µm, bevorzugt zwischen einschließlich 10 µm und einschließlich 100 µm auf.

Die Klebemasse der vorliegenden Erfindung ist insbesondere für poröse und/oder raue und/oder faserhaltige Oberflächen geeignet. Dabei kann das Substrat auch flexibel sein. Das Substrat kann auch unpolar sein. Es kann sich insbesondere um Gewebe, Gelege und Gewirke wie insbesondere Vliese handeln.

Beispiele für faserhaltige Substrate sind Vliese, bei denen es sich um Flächengebilde aus einzelnen Fasern handelt. Dabei können alle nach der Norm DIN EN 29092 (1992/08) definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie z.B. Glas, Mineralwolle oder Basalt, tierische Fasern, wie z.B. Seide oder Wolle, pflanzliche Fasern, wie z.B. Baumwolle, Zellulose, chemische Fasern, wie z.B. Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Ebenso werden Polyolefin-basierende Vliese als Substrat bevorzugt. Das Flächengewicht der Vliese beträgt bevorzugt zwischen 4 und 100 g/m², besonders bevorzugt zwischen 10 und 70 g/m². Solche Vliese sind z.B. kommerziell von der Firma Glatfelter erhältlich. Die Dicke dieser Vliese beträgt bevorzugt zwischen 20 und 100 µm, äußerst bevorzugt zwischen 30 und 60 µm.

Soll ein Gegenstand mit einer porösen Oberfläche auf einem Gegenstand mit einer glatten Oberfläche befestigt werden, so sind doppelseitige Klebebänder, deren eine Seite mit einer Klebemasse gemäß der vorliegenden Erfindung beschichtet ist, wohingegen auf der anderen Seite eine Klebemasse, die gut auf glatten Oberflächen haftet, aufgebracht ist, sehr gut geeignet. Ein Beispiel für eine derartige Anwendung ist die Anbringung von Schutzhauben auf einem zu schützenden Objekt. Die Schutzhaube besteht dabei aus einem faser-haltigen also porösen Gelege, das Polyolefin-basierend sein kann. Ein Beispiel für ein solches Schutzhaubenmaterial ist Spinnvlies-Olefin Tyvek^{®} der Fa. DuPont (http://www.dupont.de/produkte-und-dienstleistungen/verpackungsmaterialien-undloesungen/industrielle-verpackungen/use-and-applications/protective-covers.html vom 18.12.2017).

Die erfindungsgemäßen Klebemassen ermöglichen ein gewisses Einfließen der Klebemasse in den porösen und/oder faserhaltigen Untergrund und gewährleisten gleichzeitig die Anforderungen an Witterungsbeständigkeit. Neben einer guten Haftung auf porösem Untergrund wird darüber hinaus trotz des Zusatzes von Weichmachern ein Ausquetschen der Klebemasse, das sog. "Oozing" vermieden.

Klebefolien können in beiden Dimensionen beliebige Ausmaße annehmen. Klebebänder sind zum Beispiel 2 mm, 5 mm, 10 mm, 20 mm oder 50 mm breit. Klebebänder können zu Rollen gewickelt vorliegen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Klebeprodukte werden insbesondere auf einem Trennliner (bevorzugt silikonisiertes Papier oder silikonisierte Folie) bereitgestellt. Der Liner kann einseitig trennend ausgestattet sein. Dann kommt vorteilhaft eine zweite Lage eines Liners zur Abdeckung der zweiten Oberfläche zum Einsatz (vor allem bei Stanzlingen). Der Liner kann auch beidseitig trennend ausgestattet sein. Dann kann mit einer Linerlage gearbeitet werden (vor allem bei Klebebändern).

Die Herstellung der Klebemassen kann sowohl lösungsmittelbasiert wie auch lösungsmittelfrei erfolgen. Die lösungsmittelfreie Herstellung ist, da billiger und schneller, bevorzugt, wobei es auch Anwendungsbereiche geben kann, in denen die lösungsmittelbasierte Herstellung bevorzugt ist. Dies gilt zum Beispiel, wenn besondere Anforderungen an die Qualität für die optischen Eigenschaften gestellt werden.

Für die lösungsmittelfreie Herstellung sind wahlweise die Verwendung eines Hotmelt-Kneters oder eines Extruders besonders bevorzugt.

Weitere Schichten des Klebebandes können durch Kaschieren in den Produktaufbau eingebracht werden.

Demgemäß betrifft die Erfindung zudem ein doppelseitiges Klebeband zur Befestigung von großen Flächengebilden zum Transport- und/oder Montageschutz auf Untergründen wie Automobillack, bestehend aus einer ersten Klebeseite A aus einer erfindungsgemäßen Klebemasse und einer zweiten Klebeseite B aus einer Klebemasse B, wobei Klebemasse B selbstklebrig und für eine reversible Verklebung auf Automobillack geeignet ist.

Alternativ betrifft die Erfindung ein doppelseitiges Klebeband zur Befestigung von großen Flächengebilden zum Transport- und/oder Montageschutz auf Untergründen wie Automobillack, bestehend aus einer ersten Klebeseite A aus einer erfindungsgemäßen Klebemasse und aus einer zweiten Klebeseite B aus einer Klebemasse B, die Isobutylkautschuk oder dessen Derivate oder Abmischungen beinhaltet, basiert.

Die Seite des Klebebands mit der erfindungsgemäßen Klebemasse ist bei Verwendung dem großen Flächengebilde zugewandt und dient seiner Befestigung. EP 2 036 961 A1 beschreibt solche Anwendungen.

Allgemein besteht der erfindungsgemäße Gegenstand aus einem Klebeband mit zwei Klebeschichten. In einer vorteilhaften Ausführung sind diese von einem Trägermaterial unterstützt. Dieses kann ein Gewebe, Gewirke, Gelege, Vlies, Folie, Papier, und deren Verbundwerkstoffe und Kombinationsprodukte sein, welche auf natürlichen oder synthetischen Materialien oder deren Kombination oder Mischung basieren.

Demzufolge werden vorteilhafterweise polymere Folien, Vliese oder Gewebe aus Polypropylen, Polyester, Polyamid, Polyurethan oder Polyethylen sowie auch in Kombination mit mineralischen Fasern wie Glasfasern oder Kohlenstofffasern oder aus Produkten wie Gewebe, Gelege und Gewirke mit Cellulose oder Baumwollfasern, ferner metallischen Ursprungs eingesetzt. Für spezielle Anwendungen können auch Mischprodukte wir Compounds oder Mischfaserprodukt, gegebenenfalls als Mischfaserfäden, -garne oder -zwirne eingesetzt werden. Diese können teilweise gefärbt oder anderweitig ausgerüstet sein, um das Trägermaterial optische oder mechanische Merkmale und Eigenschaften zu verleihen. In alternativen Ausführungen können auch Fasern natürlichen Ursprungs wie Baumwolle, Seide, Flachs oder Zellwolle verwendet werden.

Bei der alternativen Ausführungsform des Erfindungsgegenstands wird ein Vlies als Trägermaterial zum Maskieren von Oberflächen eingesetzt. Das Vlies ist dabei durch die Bildung von Nähten, die von Maschen aus den Fasern des Vlieses gebildet werden, verstärkt, wobei vorteilhafterweise die Anzahl der Nähte auf dem Vlies mindestens 3/cm, bevorzugt 5/cm bis 50/cm, beträgt.

In einer weiteren vorteilhaften Ausführungsform ist der Erfindungsgegenstand von Hand senkrecht zur Orientierung und/oder in Richtung der Nähte reißbar. Dieses findet häufig dann Anwendung, wenn das erfindungsgemäße Produkt auf sich selbst zur Rolle gewickelt wird.

Bei einer anderen Ausführungsform ist diese Reißbarkeit nicht notwendig. Hier kann es sich um gestanzte Produkte zum Verkleben auf dem großen Flächengebilde handeln.

Die erfindungsgemäße Klebemasse weist vorteilhaft folgendes Eigenschaftsprofil auf:

| Eigenschaft | Physikalische Messgröße | Einheit | Wert(ebereich) |
|---|---|---|---|
| Kohäsion (Test I) | Scherstandzeit 40°C | Min | ≥ 1.000 Min; |
| | | | bevorzugt ≥ 10.000 Min |
| Adhäsion (Test II) | Klebkraft PE | N/cm | ≥ 1,5 N/cm |
| | | | bevorzugt ≥ 3 N/cm |

### Prüfmethoden

### Testmethode I - Statischer Schertest bei 40°C

Die Scherfestigkeit bei 40°C ist ein Maß für die innere Festigkeit der Klebmasse bei erhöhter Temperatur und wird im so genannten statischen Schertest folgendermaßen geprüft:
Die Prüfung erfolgt in Anlehnung an PSTC-7 bei 40 °C unter Verwendung eines Gewichtes von 1 kg. Ein 1,3 cm breiter Streifen dieses Musters wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (40 °C), aber ohne Last äquilibriert. Dann wird das Testgewicht (1 kg) angehängt, so dass eine Scherbeanspruchung parallel zur Verklebungsfläche entsteht, und die Zeit gemessen, bis die Verklebung versagt. Das Messergebnis wird in Minuten angegeben und bei Versagen die Versagensart (Kohäsionsbruch oder Adhäsionsbruch). Es wird der Median aus drei Einzelmessungen angegeben.

### Testmethode II - Klebkraft 180°

Die Bestimmung der Klebkraft auf Polyethylen (PE) erfolgte bei einem Prüfklima von 23 °C +/- 1 °C Temperatur und 50 % +/- 5 % rel. Luftfeuchte. Die Muster wurden auf 20 mm Breite zugeschnitten und auf eine PE-Platte geklebt. Die Prüfplatte wurde vor der Messung gereinigt und konditioniert. Dazu wurde die PE-Platte Isopropanol und Zellstoff gesäubert und danach 2h an der Luft liegen gelassen, damit das Lösungsmittel abdampfen konnte. Danach erfolgte das Anrollen des Prüfmusters auf den Prüfuntergrund. Hierzu wurde das Tape mit einer 4 kg - Rolle fünfmal hin und her mit einer Aufrollgeschwindigkeit von 10 m/min überrollt. Die Klebkraftmessung erfolgte mit einer Zwick-Zugprüfmaschine bei einem Winkel von 180° und einer Geschwindigkeit von 300mm/min. Die Messergebnisse sind in N/cm angegeben und sind gemittelt aus drei Einzelmessungen.

### Testmethode III - Viskosität der Weichharze

Zur Bestimmung der Schmelzviskosität der Weichharze wurde ein Schubspannungssweep in einem schubspannungsgeregelten DSR 200 N Rheometer der Firma Rheometrics Scientific in Rotation durchgeführt. Es kam ein Kegel/Platte-Messsystem mit einem Durchmesser von 25 mm (Kegelwinkel 0,1002 rad) zur Anwendung, der Messkopf war luftgelagert und geeignet für Normalkraftmessungen. Der Spalt betrug 0,053 mm und die Messtemperatur 25 °C. Die Frequenz wurde von 0,002 Hz bis 200 Hz variiert und die Schmelzviskosität bei 1 Hz registriert.

### Testmethode IV - Molekulargewicht, GPC

IVa: Klebharze: Die Bestimmung des mittleren Molekulargewichtes M_{W} (Gewichtsmittel) der Klebharze - auch Molmasse genannt - erfolgt mittels Gelpermeationschromatographie (GPC). Als Eluent wird THF eingesetzt. Die Messung erfolgt bei 23 °C. Als Vorsäule wird PSS-SDV, 10 µm, ID 8,0 mm x 50 mm verwendet. Zur Auftrennung wurden die Säulen PSS-SDV, 5 µm, 10³ Å und 10² Å mit jeweils ID 8,0 mm × 300 mm eingesetzt. Die Probenkonzentration beträgt ca. 2 g/l, die Durchflussmenge 1,0 ml pro Minute. Es wird gegen PS-Standards gemessen. Als Detektor wird ein Brechungsindexdetektor verwendet.

IVb: Blockcopolymere: Die Bestimmung des mittleren Molekulargewichtes M_{W} (Gewichtsmittel) der Blockcopolymere - auch Molmasse genannt - erfolgt mittels Gelpermeationschromatographie (GPC). Als Eluent wird THF eingesetzt. Die Messung erfolgt bei 23 °C. Als Vorsäule wird PSS-SDV, 5 µm, ID 8,0 mm x 50 mm verwendet. Zur Auftrennung wurden die Säulen PSS-SDV, 5 µm, 10³ Å, 10⁵ Å und 10⁶ Å mit jeweils ID 8,0 mm × 300 mm eingesetzt. Die Probenkonzentration beträgt ca. 3 g/l, die Durchflussmenge 1,0 ml pro Minute. Es wird gegen PS-Standards gemessen. Als Detektor wird ein Brechungsindexdetektor verwendet.

### Testmethode V - Harzerweichungstemperatur

Die Klebharzerweichungstemperatur wird nach der einschlägigen Methodik durchgeführt, die als Ring & Ball bekannt ist und nach ASTM E28 - 14 standardisiert ist.

Zur Bestimmung der Klebharzerweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Klebharzerweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Klebharzerweichungstemperatur ist der Mittelwert aus den beiden Einzelmessungen.

### Beispiele

### Musterpräparation (aus Lösung)

Die Rohstoffe wurden in entsprechenden Verhältnis in ein Glas gegeben. Dazu wurde ein Lösemittelgemisch aus Toluol Benzin und Aceton gegeben, sodass ein Feststoffgehalt von 40 Gew.-% erhalten wird und die Massen anschließend auf einer Rollbank 2 Tage lang gelöst werden. Die gelösten Klebmasselösungen wurden mit Hilfe eines Streichtisches der Firma Zentner auf eine 23µm geätzte PET-Folie beschichtet, sodass im getrockneten Zustand eine Schichtdicke von 70 µm erreicht wird. Diese Muster wurden anschließend in einem Ofen der Firma Thermo Scientific bei 120°C für 20 Minuten getrocknet.

### Eingesetzte Rohstoffe

**Tabelle 1: eingesetzte Rohstoffe**

| | Name | Typ | Hersteller |
|---|---|---|---|
| Elastomere | Tuftec P1500 | Polystyrol-Poly(butadien-co-butylen)-Blockcopolymer (SBBS), Polystyrolanteil: 30 Gew.-% | Asahi Kasei |
| Klebharze | Regalite R 1125 | Vollhydriertes Kohlenwasserstoffharz hydrierter Kolophoniumester | Eastman |
| | Foral 105 | | Eastman |
| Weichharze | Wingtack 10 | C5-Harz, Schmelzviskosität 22 Pa s | Cray Valley |
| Alterungsschutzmittel | Irganox 1010 | Sterisch gehindertes Phenol | BASF |

### Beispiele

Alle Angaben in Gew.-%; alle Klebemassen (100 Teile) enthielten außerdem zusätzlich jeweils 1,5 Teile Irganox 1010.

**Tabelle 2:**

| Beispiele (aus Lösung): | | | | | |
|---|---|---|---|---|---|
| **Rohstoffe** | **Beispiel E1** | **Beispiel E2** | **Beispiel E3** | **Beispiel E4** | **Beispiel E5** |
| **Elastomer** | 53,4 | 49,7 | 38,4 | 35,0 | 52,2 |
| Tuftec P1500 [%] | | | | | |
| **Klebharz 1** | 15,6 | 2,5 | 0,0 | 0,0 | 6,4 |
| Regalite R1125 [%] | | | | | |
| **Klebharz 2** | 29,5 | 46,3 | 41,4 | 38,5 | 14,9 |
| Foral 105 [%] | | | | | |
| **Weichharz** | 0,0 | 0,0 | 18,7 | 25,0 | 25,0 |
| Wingtack 10 [%] | | | | | |
| **Alterungsschutz** [%] | 1,5 | 1,5 | 1,5 | 1,5 | 1,5 |
| **Formulierungskonzept** | A | A | A | A | A |
| **KK PE 180° [N/cm]** | 1,74 | 4,21 | 4,37 | 6,95 | 4,65 |
| **SSZ 40°C 1KG [min]** | 10000 | 10000 | 10000 | 1434 | 10000 |

**Tabelle 3:**

| **Rohstoffe** | **Beispiel E6** | **Beispiel E7** | **Beispiel E8** |
|---|---|---|---|
| **Elastomer** | 60,0 | 35,0 | 60,0 |
| Tuftec P1500 [%] | | | |
| **Klebharz 1** | 25,8 | 15,6 | 13,5 |
| Regalite R1125 [%] | | | |
| **Klebharz 2** | 12,7 | 25,1 | 0,0 |
| Foral 105 [%] | | | |
| **Weichharz** | 0,0 | 22,8 | 25,0 |
| Wingtack 10 [%] | | | |
| **Alterungsschutz** [%] | 1,5 | 1,5 | 1,5 |
| **Formulierungskonzept** | A | A | B |
| **KK PE 180° [N/cm]** | 5,38 | 5,39 | 2,10 |
| **SSZ 40°C 1KG [min]** | 10000 | 3451 | 10000 |

**Tabelle 4 (Vergleichsbeispiele):**

| **Rohstoffe** | **Beispiel V1** | **Beispiel V2** | **Beispiel V3** |
|---|---|---|---|
| **Elastomer** | 37,0 | 47,7 | 60,0 |
| Tuftec P1500 [%] | | | |
| **Klebharz 1** | 28,8 | 38,5 | 29,4 |
| Regalite R1125 [%] | | | |
| **Klebharz 2** | 27,5 | 0,0 | 0,0 |
| Foral 105 [%] | | | |
| **Weichharz** | 5,2 | 12,3 | 9,1 |
| Wingtack 10 [%] | | | |
| **Alterungsschutz** [%] | 1,5 | 1,5 | 1,5 |
| **Formulierungskonzept** | A | A/B | B |
| **KK PE 180° [N/cm]** | 0,51 | 0,89 | 1,29 |
| **SSZ 40°C 1KG [min]** | 10000 | 10000 | 10000 |

Tabelle 2 und 3 zeigen verschiedene erfindungsgemäße Klebemassenzusammensetzungen gemäß Variante A (Beispiele E1 bis E8) sowie gemäß Variante B (Beispiel E9) mit ihren Eigenschaften in Bezug auf Verklebungsfestigkeit und Scherfestigkeit. Die Anteile an Elastomer, ggf. Klebharz 1 und 2 sowie ggf. Weichmacher sind in den erfindungsgemäßen Bereichen variiert. Die Ergebnisse der Testmethoden zeigen erwartungsgemäß, dass ein höherer Elastomeranteil durch erhöhte Kohäsion eine höhere Scherstandzeit mit sich bringt. Was die Klebkraft betrifft, zeigen die Versuchsergebnisse, dass die angegebenen speziellen Bereiche für die unterschiedlichen Komponenten Elastomer, Klebharz 1 und 2 sowie Weichharz in ihrer erfindungsgemäßen Kombination zu den gewünschten Eigenschaften führen. Es besteht kein zweifelsfrei vorhersagbarer Einfluss einer Komponente allein, sondern bestimmte Zusammensetzungskombinationen liefern besonders günstige Ergebnisse.

Die Vergleichsbeispiele, die in Tabelle 4 wiedergegeben sind, zeigen, dass nicht allein die Anwesenheit eines Weichharzes für ausreichende Klebkraft sorgt, sondern die Menge an Weichharz in Verbindung mit der Menge der weiteren Komponenten zu betrachten ist.

## Patentansprüche

1. Klebemasse, bestehend aus Elastomer, mindestens einem Klebharz, optional einem Weichharz sowie optional mindestens einem weiteren Additiv, wobei die Klebemasse eine der beiden folgenden Zusammensetzungen A oder B aufweist:
Zusammensetzung A:
Aa) 35 Gew.-% bis 60 Gew.-% einer Elastomerkomponente, die zu mindestens 80 Gew.-% zumindest eine Sorte eines Vinylaromatenblockcopolymers enthält, das zumindest einen Block bestehend aus konjugierten Dienen enthält, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind,
Ab) 0 Gew.-% bis 40 Gew.-% zumindest einer Sorte eines ersten Klebharzes, das ein teil- oder vollhydriertes Kohlenwasserstoffharz mit einem Hydrierungsgrad von mindestens 65% ist,
Ac) 10 Gew.-% bis 50 Gew.-% zumindest einer Sorte eines zweiten Klebharzes, das ein Kolophoniumester ist,
Ad) 0 Gew.-% bis 25 Gew.-% eines Weichharzes mit einer Schmelzviskosität bei 25°C und 1 Hz von mindestens 5 Pa s,
Ae) 0 Gew.-% bis 5 Gew.-% mindestens eines weiteren Additivs,
wobei der Gesamtanteil an Klebharz 20 Gew.-% bis 50 Gew.-% beträgt;
oder Zusammensetzung B:
Ba) 35 Gew.-% bis 60 Gew.-% einer Elastomerkomponente, die zu mindestens 80 Gew.-% zumindest eine Sorte eines Vinylaromatenblockcopolymers enthält, das zumindest einen Block bestehend aus konjugierten Dienen enthält, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind,
Bb) 10 Gew.-% bis 50 Gew.-% zumindest einer Sorte eines ersten Klebharzes, das ein teil- oder vollhydriertes Kohlenwasserstoffharz mit einem Hydrierungsgrad von mindestens 65% ist,
Bc) 0 Gew.-% bis 10 Gew.-% zumindest einer Sorte eines zweiten Klebharzes, das ein Kolophoniumester ist,
Bd) 15 Gew.-% bis 25 Gew.-% eines Weichharzes mit einer Schmelzviskosität bei 25°C und 1 Hz von mindestens 5 Pa s,
Be) 0 Gew.-% bis 5 Gew.-% mindestens eines weiteren Additivs,
wobei der Gesamtanteil an Klebharz 10 Gew.-% bis 50 Gew.-% beträgt,
wobei der Anteil niederviskoser Weichmacher in der Klebemasse bei höchstens 1 Gew.-% liegt.

2. Klebemasse nach Anspruch 1, **dadurch gekennzeichnet, dass** das Vinylaromatenblockcopolymer ein Styrolblockcopolymer ist, bevorzugter ein Polystyrol-Poly(butadien-*co*-butylen)-Blockcopolymer ist.

3. Klebemasse nach Anspruch 1 oder 2, **dadurch gekennzeichnet, dass** das teil- oder vollhydrierte Kohlenwasserstoffharz einen Hydrierungsgrad von mindestens 80 % aufweist, insbesondere vollständig hydriert ist.

4. Klebemasse nach Anspruch einem der Ansprüche 1 bis 3, **dadurch gekennzeichnet, dass** das Weichharz eine Schmelzviskosität bei 25°C und 1 Hz von mindestens 25 Pa s aufweist.

5. Klebemasse nach einem der Ansprüche 1 bis 4, **dadurch gekennzeichnet, dass** die Klebemasse nach Zusammensetzung A von 5 Gew.-% bis 20 Gew.-% eines Weichharzes Ad) mit einer Schmelzviskosität bei 25°C und 1 Hz von mindestens 5 Pa s enthält.

6. Klebemasse nach einem der Ansprüche 1 bis 5, **dadurch gekennzeichnet, dass** das Weichharz ein Kolophonium basierendes oder ein Kohlenwasserstoff basierendes Weichharz ist.

7. Klebemasse nach einem der Ansprüche 1 bis 6, **dadurch gekennzeichnet, dass** sie als weiteres Additiv mindestens ein UV-Schutzmittel, insbesondere in einer Menge von 0,5 Gew.-% bis 2 Gew.-%, enthält.

8. Klebemasse nach einem der Ansprüche 1 bis 7, **dadurch gekennzeichnet, dass** sie als weiteres Additiv mindestens ein Antioxidationsmittel, insbesondere in einer Menge von 0,2 Gew.-% bis 0,8 Gew.-%, insbesondere ein Alterungsschutzmittel ausgewählt aus der Gruppe der Ein- und/oder Mehrkernphenole, die in Ortho- und/ oder Parastellung zur phenolischen OH-Gruppe eine Benzylthioethergruppierung trägt, enthält.

9. Klebeband, insbesondere doppelseitiges Klebeband, enthaltend mindestens eine Klebemasse nach einem der Ansprüche 1 bis 8.

10. Klebeband nach Anspruch 9, **dadurch gekennzeichnet, dass** es einen Träger enthält.

11. Klebeband nach Anspruch 9 oder 10, **dadurch gekennzeichnet, dass** es ein Transfertape ist.

12. Verwendung des Klebebands nach einem der Ansprüche 9 bis 11 zur Verklebung auf einem porösen, faserhaltigen und/oder rauen, insbesondere flexiblem Substrat.

## Claims

1. An adhesive compound consisting of elastomer, at least one tackifier resin, an optional soft resin as well as at least one optional further additive, wherein the adhesive compound has one of the following two compositions A or B:
composition A:
Aa) 35% by weight to 60% by weight of an elastomer component which contains at least 80% by weight of at least one type of a vinyl aromatic block copolymer which contains at least one block consisting of conjugated dienes in which the terminal double bonds, formed by 1,2-addition, are more than 80% hydrogenated, while the double bonds in the main chain, formed by 1,4-addition, are less than 30% hydrogenated,
Ab) 0% by weight to 40% by weight of at least one type of a first tackifier resin which is a partially or fully hydrogenated hydrocarbon resin with a degree of hydrogenation of at least 65%,
Ac) 10% by weight to 50% by weight of at least one type of a second tackifier resin which is a rosin ester,
Ad) 0% by weight to 25% by weight of a soft resin with a melt viscosity at 25°C and 1 Hz of at least 5 Pa s,
Ae) 0% by weight to 5% by weight of at least one further additive,
wherein the total proportion of tackifier resin is 20% by weight to 50% by weight;
or composition B:
Ba) 35% by weight to 60% by weight of an elastomer component which contains at least 80% by weight of at least one type of a vinyl aromatic block copolymer which contains at least one block consisting of conjugated dienes in which the terminal double bonds, formed by 1,2-addition, are more than 80% hydrogenated, while the double bonds in the main chain, formed by 1,4-addition, are less than 30% hydrogenated,
Bb) 10% by weight to 50% by weight of at least one type of a first tackifier resin which is a partially or fully hydrogenated hydrocarbon resin with a degree of hydrogenation of at least 65%,
Bc) 0% by weight to 10% by weight of at least one type of a second tackifier resin which is a rosin ester,
Bd) 15% by weight to 25% by weight of a soft resin with a melt viscosity at 25°C and 1 Hz of at least 5 Pa s,
Be) 0% by weight to 5% by weight of at least one further additive,
wherein the total proportion of tackifier resin is 10% by weight to 50% by weight,
wherein the proportion of low viscosity plasticizers in the adhesive compound is at most 1% by weight.

2. The adhesive compound as claimed in claim 1, **characterized in that** the vinyl aromatic block copolymer is a styrene block copolymer, preferably a polystyrene-poly(butadiene-co-butylene) block copolymer.

3. The adhesive compound as claimed in claim 1 or claim 2, **characterized in that** the partially or fully hydrogenated hydrocarbon resin has a degree of hydrogenation of at least 80%, and in particular is fully hydrogenated.

4. The adhesive compound as claimed in one of claims 1 to 3, **characterized in that** the soft resin has a melt viscosity at 25°C and 1 Hz of at least 25 Pa s.

5. The adhesive compound as claimed in one of claims 1 to 4, **characterized in that** the adhesive compound in accordance with composition A contains from 5% by weight to 20% by weight of a soft resin Ad) with a melt viscosity at 25°C and 1 Hz of at least 5 Pa s.

6. The adhesive compound as claimed in one of claims 1 to 5, **characterized in that** the soft resin is a rosin-based or a hydrocarbon-based soft resin.

7. The adhesive compound as claimed in one of claims 1 to 6, **characterized in that** it contains at least one UV stabilizer, in particular in a quantity of 0.5% by weight to 2% by weight, as the further additive.

8. The adhesive compound as claimed in one of claims 1 to 7, **characterized in that** it contains, as the further additive, at least one antioxidant, in particular in a quantity of 0.2% by weight to 0.8% by weight, in particular an anti-degradant selected from the group of monocyclic and/or polycyclic phenols which contains a benzylthioether group in the position ortho- and/or para- to the phenolic OH group.

9. An adhesive tape, in particular double-sided adhesive tape, comprising at least one adhesive compound as claimed in one of claims 1 to 8.

10. The adhesive tape as claimed in claim 9, **characterized in that** it contains a carrier.

11. The adhesive tape as claimed in claim 9 or claim 10, **characterized in that** it is a transfer tape.

12. Use of the adhesive tape as claimed in one of claims 9 to 11 for bonding to a porous, fibrous and/or rough, in particular flexible, substrate.

## Revendications

1. Masse d'adhésif, constituée d'élastomère, d'au moins une résine adhésive, optionnellement d'une résine souple ainsi qu'optionnellement d'au moins un autre additif, la masse d'adhésif présentant l'une des deux compositions A ou B suivantes :
Composition A :
Aa) 35 % en poids à 60 % en poids d'un composant élastomère contenant au moins 80 % en poids d'au moins une espèce de copolymère en blocs vinylaromatiques lequel contient au moins un bloc constitué de diènes conjugués dont les liaisons doubles terminales, obtenues en établissant des liaisons 1-2, sont hydrogénées à plus de 80 %, alors que les liaisons doubles dans la chaîne principale, obtenues en établissant des liaisons 1-4, sont hydrogénées à moins de 30 %,
Ab) 0 % en poids à 40 % en poids d'au moins une espèce d'une première résine adhésive, s'agissant d'une résine d'hydrocarbure partiellement ou entièrement hydrogénée dont le degré d'hydrogénation est d'au moins 65 %,
Ac) 10 % en poids à 50 % en poids d'au moins une espèce d'une seconde résine adhésive, s'agissant d'un ester de colophane,
Ad) 0 % en poids à 25 % en poids d'une résine souple dont la viscosité à l'état fondu, à 25 °C et 1 Hz, est supérieure ou égale à 5 Pa.s,
Ae) 0 % en poids à 5 % en poids d'au moins un autre additif,
la proportion globale de la résine adhésive étant comprise entre 20 % en poids et 50 % en poids ;
ou composition B :
Ba) 35 % en poids à 60 % en poids d'un composant élastomère contenant au moins 80 % en poids d'au moins une espèce de copolymère en blocs vinylaromatiques lequel contient au moins un bloc constitué de diènes conjugués dont les liaisons doubles terminales, obtenues en établissant des liaisons 1-2, sont hydrogénées à plus de 80 %, alors que les liaisons doubles dans la chaîne principale, obtenues en établissant des liaisons 1-4, sont hydrogénées à moins de 30 %,
Bb) 10 % en poids à 50 % en poids d'au moins une espèce d'une première résine adhésive, s'agissant d'une résine d'hydrocarbure partiellement ou entièrement hydrogénée dont le degré d'hydrogénation est d'au moins 65 %,
Bc) 0 % en poids à 10 % en poids d'au moins une espèce d'une seconde résine adhésive, s'agissant d'un ester de colophane,
Bd) 15 % en poids à 25 % en poids d'une résine souple dont la viscosité à l'état fondu, à 25 °C et 1 Hz, est supérieure ou égale à 5 Pa.s,
Be) 0 % en poids à 5 % en poids d'au moins un autre additif,
la proportion globale de la résine adhésive étant située entre 10 % en poids et 50 % en poids,
la proportion de plastifiants à faible viscosité dans la masse d'adhésif étant inférieure ou égale à 1 % en poids.

2. Masse d'adhésif selon la revendication 1, **caractérisée en ce que** le copolymère à blocs vinylaromatiques est un copolymère à blocs de styrène, de manière plus préférée un copolymère à blocs de polystyrène-poly(butadiène-co-butylène).

3. Masse d'adhésif selon les revendications 1 ou 2, **caractérisée en ce que** la résine d'hydrocarbure partiellement ou entièrement hydrogénée présente un degré d'hydrogénation d'au moins 80 %, et qu'elle est notamment entièrement hydrogénée.

4. Masse d'adhésif selon l'une des revendications 1 à 3, **caractérisée en ce que** la résine souple présente, à 25 °C et 1 Hz, une viscosité à l'état fondu d'au moins 25 Pa.s.

5. Masse d'adhésif selon l'une des revendications 1 à 4, **caractérisée en ce que** la masse d'adhésif contient, selon la composition A, de 5 % en poids à 20 % en poids d'une résine souple Ad) présentant, à 25 °C et 1 Hz, une viscosité à l'état fondu d'au moins 5 Pa.s.

6. Masse d'adhésif selon l'une des revendications 1 à 5, **caractérisée en ce que** la résine souple est une résine souple à base de colophane ou à base d'hydrocarbure.

7. Masse d'adhésif selon l'une des revendications 1 à 6, **caractérisée en ce qu'**elle contient, en tant qu'autre additif, au moins un filtre UV, notamment dans une quantité comprise entre 0,5 % en poids et 2 % en poids.

8. Masse d'adhésif selon l'une des revendications 1 à 7, caractérisée en qu'elle contient, en tant qu'autre additif, au moins un antioxydant, notamment dans une quantité comprise entre 0,2 % en poids et 0,8 % en poids, s'agissant plus particulièrement d'un agent de protection contre de vieillissement choisi dans le groupe des phénols à un et/ou plusieurs noyaux qui sont pourvus, en position ortho- et/ou para par rapport au groupement OH phénolique, d'un groupement benzylthioéther.

9. Ruban adhésif, notamment ruban adhésif double face, contenant au moins une masse d'adhésif selon l'une des revendications 1 à 8.

10. Ruban adhésif selon la revendication 9, **caractérisé en ce qu'**il contient un support.

11. Ruban adhésif selon les revendications 9 ou 10, **caractérisé en ce qu'**il s'agit d'un ruban sans support.

12. Utilisation du ruban adhésif selon l'une des revendications 9 à 11 pour réaliser un collage sur un substrat de type poreux, contenant des fibres et/ou de type rugueux, notamment flexible.
